Europäisches Patentamt

(19) European Patent Office    (11) Veröffentlichungsnummer: **0 199 774**

Office européen des brevets    **B1**

(12) **EUROPÄISCHE PATENTSCHRIFT**

(45) Veröffentlichungstag der Patentschrift:    (51) Int. Cl.⁴: **G 01 N 15/02,** G 01 N 29/02
12.07.89

(21) Anmeldenummer: **85905406.6**

(22) Anmeldetag: **23.10.85**

(86) Internationale Anmeldenummer:
**PCT/EP 85/00560**

(87) Internationale Veröffentlichungsnummer:
**WO 86/02727 (09.05.86 Gazette 86/10)**

(54) **VERFAHREN ZUM MESSEN DER FESTSTOFFKONZENTRATION UND DER KORNGRÖSSENVERTEILUNG IN EINER SUSPENSION MITTELS ULTRASCHALL.**

(30) Priorität: **23.10.84 DE 3438798**

(43) Veröffentlichungstag der Anmeldung:
**05.11.86 Patentblatt 86/45**

(45) Bekanntmachung des Hinweises auf die Patenterteilung:
**12.07.89 Patentblatt 89/28**

(84) Benannte Vertragsstaaten:
**BE CH DE FR GB IT LI NL**

(56) Entgegenhaltungen:
**US-A-3 779 070**
**US-A-3 802 271**

**Patents Abstracts of Japan, Band 8, Nr. 27,(P-252)(1464) 4. Februar 1984 & JP, A, 58182549**

(73) Patentinhaber: **LÖFFLER, Friedrich, Im Eichbäumle, D-7500 Karlsruhe (DE)**

(72) Erfinder: **RIEBEL, Ulrich, Taunusstrasse 1, D-6242 Kronberg (DE)**

(74) Vertreter: **Wuesthoff, Franz, Dr.- Ing., Patentanwälte Wuesthoff -v. Pechmann- Behrens- Goetz Schweigerstrasse 2, D-8000 München 90 (DE)**

**Beschreibung**

Die Erfindung betrifft ein Verfahren zum gleichzeitigen Messen der Feststoffkonzentration und der Korngrößenverteilung in einer Suspension, bei dem Ultraschallwellen mit mehr als einer Frequenz in die Suspension eingekoppelt und ihre Absorption durch die Feststoffteilchen gemessen und ausgewertet wird.

Bei der Rohstoffgewinnung und -verarbeitung, in der chemischen Industrie und bei der Nahrungsmittelgewinnung treten haufig Suspensionen auf. Unter einer Suspension soll hier nicht nur eine feine Verteilung sehr kleiner Teilchen eines festen Stoffes in einer Flüssigkeit, sondern allgemeiner auch die Verteilung feinster Tröpfchen einer unlöslichen Flüssigkeit oder von Gasbläschen in einem Fluid verstanden werden. Zur Überwachung und Steuerung solcher verfahrenstechnischer Prozesse ist es vielfach erforderlich, die Konzentration und die Größenverteilung der Teilchen zu messen. Da die Messung und Steuerung in der Regel an einem strömenden System erfolgt, werden folgende Anforderungen gestellt:

a) die Messung soll augenblicklich erfolgen, d.h. das Meßresultat soll nach einer Zeitspanne vorliegen, in der die strömende Suspension keine wesentliche Wegstrecke zurücklegt;

b) das strömende System soll durch die Messung nicht beeinflußt werden;

c) es soll eine Entnahme von Proben vermieden werden, insbesondere dann, wenn es sich um einen giftigen, ätzenden, heißen oder unter hohem Druck stehenden Stoff handelt.

Diese Anforderungen bedingen, daß die Teilchenkonzentration und Korngrößenverteilung nicht mit einer Siebanalyse oder Sedimentationsanalyse (Sedimentationswaage oder Photosedimentometer) bestimmt werden können. Andere Verfahren, wie beispielsweise die Messung der Streuung eines Laserstrahls, genügen zwar den obigen Anforderungen, sind aber auf transparente Medien beschränkt. Auch das Verfahren des sogenannten "Coulter-Counter" ist auf bestimmte, elektrisch leitfähige Fluide beschränkt und überdies sehr störanfällig, da die zur Messung erforderliche enge Kapillare leicht verstopft wird.

Demgegenüber sind mit Ultraschallwellen arbeitende Verfahren bei jedem Fluid einsetzbar, in welches sie eingekoppelt werden können. Bekanntlich wird die Intensitätsabnahme einer Strahlung in einem absorbierenden Medium durch das Beersche Gesetz beschrieben, in welches der Absorptionskoeffizient eingeht. Ein Verfahren zum Messen der Feststoffkonzentration in einer Suspension mittels Ultraschall ist aus der DE-OS-2 257 802 bekannt. Dort werden Ultraschallwellen mit zwei Frequenzen in die Suspension eingekoppelt und die Dämpfung der Strahlintensität durch Absorption gemessen. Aus den Absorptionsdaten werden u.a. der prozentuale Volumenteil der Feststoffteilchen und der mittlere geometrische Teilchendurchmesser berechnet. Aus diesen Daten ließe sich dann eine genaue Korngrößenverteilung bestimmen, wenn die statistischen Gesetze, nach denen die Teilchen gebildet sind, bekannt wären. Dies ist aber in der Regel nicht der Fall, d.h. die Korngrössenverteilung folgt nicht einer bekannten Funktion. Somit ermöglicht das aus der DE-OS-2 257 802 bekannte Verfahren zwar Aussagen über einzelne Parameter der Korngrößenverteilung, gestattet aber keine Bestimmung der Korngrößenverteilung selbst. Die beiden Frequenzen der Ultraschallwellen werden dabei so gewählt, daß die Absorption empfindlich von den charakteristischen Parametern der Suspension abhängt. Dies hat zur Folge, daß die Frequenzen relativ nahe beieinander gewählt werden.

Aus der US-PS-3 802 271 ist ein Verfahren zum Analysieren von Teilchen in einem Fluid bekannt, bei dem Schallwellen unterschiedlicher Frequenzen in das Fluid eingestrahlt und nach Passieren desselben in ihrer Phasenbeziehung analysiert werden. Es werden zwei Schallwellen unterschiedlicher Frequenz bezüglich ihrer Phasenbeziehung untersucht, um Aussagen über die Korngrößen, ihre Verteilung und Dichte zu gewinnen.

Der Erfindung liegt die Aufgabe zugrunde, ein Verfahren zum Messen der Feststoffkonzentration und der Korngrößenverteilung in einer Suspension zu schaffen, welche den oben genannten Anforderungen a) - c) genügt und eine genaue Messung der Korngrößenverteilung ermöglicht.

Ein diese Aufgabe lösendes Verfahren ist in den Ansprüchen gekennzeichnet.

Bei einer gegebenen Suspension ist in der Regel gut bekannt, innerhalb welcher Grenzen die Durchmesser der Teilchen liegen. Es ist deshalb möglich, für eine gegebene Suspension zwei Frequenzen derart festzulegen, daß die der größeren Frequenz zugehörige Wellenlänge kleiner ist als der Durchmesser der kleinsten zu erwartenden Teilchen und die Wellenlänge der kleineren Frequenz größer ist als der Durchmesser der größten zu erwartenden Teilchen. Dies ist auch dann möglich, wenn die Teilchengrössen überhaupt nicht bekannt sind, da die zur Verfügung stehenden Frequenzen zwischen 100 kHZ und etwa 100 MHZ es erlauben, den gesamten Bereich der üblicherweise vorkommenden Teilchengrößen abzudecken. Auch sind die Absorptionskoeffizienten der Feststoffteilchen bei einer gegebenen Frequenz der Ultraschallwelle in Abhängigkeit von der Teilchengröße bekannt.

Es kann in guter Näherung in einem Teilchen-Größenintervall $\Delta x_i$ begrenzter Länge der Absorptionskoeffizient für eine gegebene Frequenz als konstant angesehen werden.

Nach der Erfindung wird nun die Korngrößenverteilung, d.h. die Konzentration der Teilchen als Funktion ihrer Große in Form einer Treppenfunktion ermittelt. Das Inkrement der Treppenfunktion sind die Teilchen-Größenintervalle, deren Betrage je nach der gewünschten Genauigkeit beliebig klein gemacht werden können. Zur Ermittlung einer hinreichend genauen Korngrößenverteilung werden beispielsweise zehn Teilchen-Größenintervalle ausreichend sein. Die Korngrößenverteilung ergibt sich dann dadurch, daß für jedes Teilchen-Größenintervall die zugehörige Konzentration der Feststoffteilchen dieser Größe festgestellt wird. Zur Ermittlung einer Korngrößenverteilung sind also die Konzentrationen von Teilchen aus einer Reihe von Teilchen-Größenordnungsintervallen jeweils zu ermitteln.

Nach der Erfindung werden die unbekannten Konzentrationen der Feststoffteilchen jeweils eines Teilchen-Größenintervalls dadurch bestimmt, daß eine Vielzahl von Ultraschallwellen mit jeweils unterschiedlichen Frequenzen $f_j$ in die Suspension eingekoppelt werden und für jede Frequenz die Absorption der Welle gemessen wird. Da Teilchen aus jedem Größenintervall entsprechend dem für diese Frequenz und das Größenintervall als bekannt anzusehenden Absorptionskoeffizienten an der Absorption beteiligt sind, ist die gemessene Gesamt-Absorption $A_j$ als Summe über alle Teilchen-Größenintervalle darzustellen, wobei die Frequenz ein konstanter Parameter ist.

Ist das Gesamt-Größenspektrum der Feststoffteilchen in n-Intervalle aufgeteilt, so sind n unbekannte Konzentrationen $c_i$ der Feststoffteil-chen für jedes Größenintervall $\Delta x_i$ zu ermitteln. Da eine einzige lineare Gleichung nicht die Berechnung mehrerer Unbekannter gestattet, werden mehrere Frequenzen $f_j$ eingestrahlt, so daß sich ein lineares Gleichungssystem ergibt.

Da zur eindeutigen Lösung eines linearen Gleichungssystems mit n Unbekannten insgesamt n linear unabhängige Gleichungen erforderlich sind, ist in einer besonderen Ausgestaltung der Erfindung vorgesehen, daß die Anzahl unterschiedlicher Frequenzen der Ultraschallwellen gleich der Anzahl der Teilchen-Größenintervalle ist.

Unter besonders günstigen Bedingungen wird man auch mit einer geringeren Anzahl an Fre-quenzen auskommen, obwohl das Gleichungssy-stem dann mehrere Lösungsvektoren aufweist, unter denen dann allerdings mittels anderer Randbedingungen der gesuchte Lösungsvektor bestimmbar ist. Bei einer Korngrößenverteilung stehen die gesuchten Konzentrationen der einzelnen Teilchen-Intervalle in einem bestimmten Größenverhältnis zueinander; von kleinen Werten der Konzentration im Randbereich der Größenintervalle wird die Konzentration zu mittleren Werten stetig ansteigen und sodann abfallen. Aus dieser Randbedingung wird sich in einer Vielzahl von Fällen auch dann die gesuchte Lösung der unbekannten Konzentrationen ermitteln lassen, wenn die Anzahl der Ultraschallwellen unterschiedlicher Frequenz geringer ist als die Anzahl der Teilchen-Größenintervalle.

Umgekehrt wird man unter besonders ungünstigen Bedingungen unter Umständen versuchen, die Genauigkeit der Messung dadurch zu verbessern, daß die Anzahl der Meßfrequenzen höher gewählt wird als die Anzahl der Teilchen-größen-Intervalle.

Es versteht sich, daß sich aus der Feststoff-Korngrößenverteilung die gesamte Feststoffkon-zentration unmittelbar durch Integration (Sum-mierung) der einzelnen Konzentrationswerte in den Größenintervallen ergibt.

Unter dem Durchmesser der Teilchen, welche nach dem eingangs Gesagten nicht nur Feststoff-Teilchen sein können, sondern auch gasförmig oder flüssig, ist der sogenannte äquivalente Murchmesser zu verstehen, welcher dem Wirkungsquerschnitt der Teilchen entspricht. Somit kann auch nichtkugelförmigen Teilchen ein definierter Durchmesser zugeordnet werden.

Die erforderliche Anzahl unterschiedlicher Ultraschall-Sender läßt sich dadurch reduzieren, daß Grund- und Oberwellen eines Senders benutzt werden.

Die Grund- und Oberfrequenzen können dabei sowohl in aufeinanderfolgenden Zeitabschnitten jeweils einzeln angeregt werden, oder sie können alle zugleich angeregt und auch empfangen und gemessen werden.

Auch läßt sich der Aufwand an Bauteilen dadurch reduzieren, daß man im Impuls-Echo-Verfahren mißt. Dabei dient derselbe piezoelektrische Schwinger intermittierend als Sender eines kurzen Ultraschallimpulses und als Empfänger des Echos, das durch Reflexion an einem gegenüberliegenden Reflektor entsteht. Die Ultraschallwelle durchläuft die Meßstrecke also zweimal.

Werden die Ultraschallwellen-Sender kontinuierlich angeregt, so ist zur Vermeidung von stehenden Wellen die Absorptionsstrecke unter einem Winkel zur die Suspension ein-schließenden Wandung angeordnet, der ver-schieden von 90° ist.

Vorteilhafte Ausgestaltungen der Erfindung sind in den abhängigen Ansprüchen beschrieben.

Nachfolgend ist die Erfindung anhand der Zeichnung näher erläutert. Dabei zeigt:

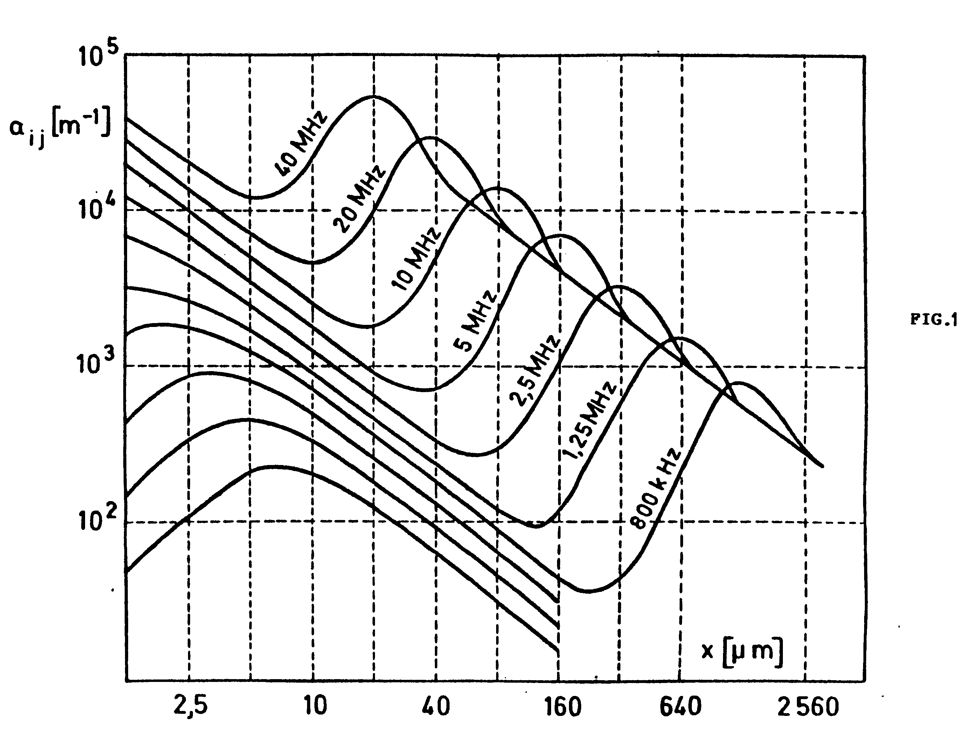

Fig. 1    die Abhängigkeit des Absorp-tionskoeffizienten $a_{ij}$ von der Partikelgrö-ße für verschiedene Frequenzen, be-rechnet für Suspensionen von Quarz in Wasser und

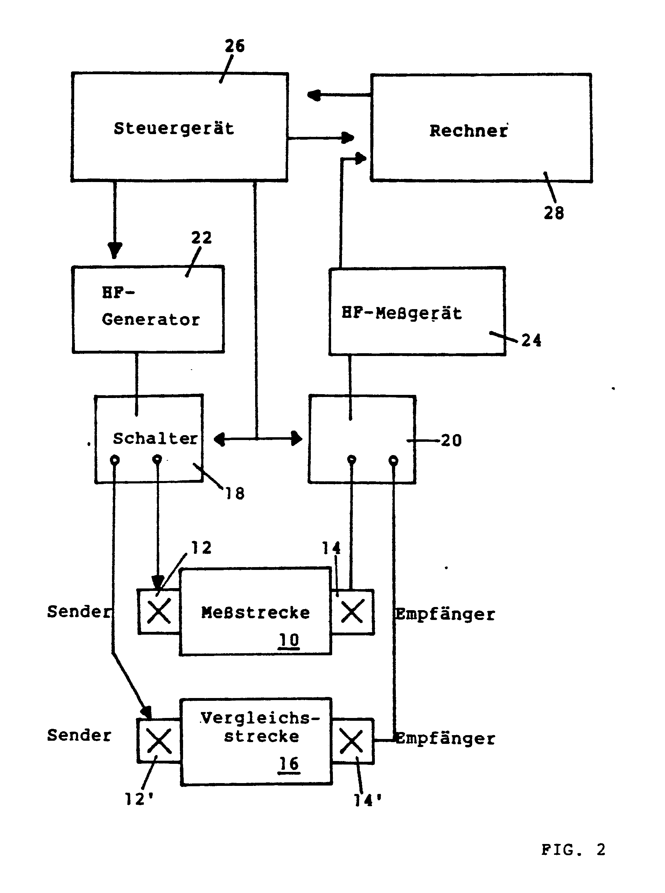

Fig. 2    eine Vorrichtung zur Durchführung des Verfahrens in schematischer Darstellung.

Eine Meßstrecke 10 durchsetzt die strömende Suspension, deren Feststoffkonzentration und Korngrößenverteilung ermittelt werden soll. Die Meßstrecke wird durch einen Ultraschallwellen-Sender 12 und einen Ultraschallwellen-Empfänger 14 definiert.

Neben der die Suspension durchsetzenden Meßstrecke 10 ist noch eine weitere Meßstrecke 16 vorgesehen, die das teilchenfreie Fluid durchsetzt. Diese zusätzliche Meßstrecke dient der Null-Eichung der gesamten Meßvorrichtung und ist mit einem Sender 12' und einem Empfänger 14' ausgestattet, die den eigentlichen Meß-Sendern und -Empfängern 12 und 14 entsprechen.

Schalter 18 und 20 versorgen entweder die Meßstrecke 10 oder die Vergleichs-Meßstrecke 16 mit Anregungsfrequenzen eines HF-Generators 22 bzw. schalten das Empfangssignal auf ein HF-Meßgerät 24 zur Messung der durch Absorption geschwächten Intensität der Ultraschallwellen.

Der Sender 12 steht in der Zeichnung für eine Vielzahl, d.h. mehr als nur 2, von Ultraschall-Quellen unterschiedlicher Frequenz. Auf die Art der Erzeugung der Ultraschallwellen, auf deren Einkoppelung in die Suspension, auf den Empfang und die Einzelheiten der Messung braucht hier nicht näher eingegangen zu werden, da sie dem Fachmann geläufig sind.

Ein Steuergerät 26 dient u.a. der Vorgabe der Frequenzen, der Intensitäten und gegebenenfalls der Impulsdauer, falls im Impuls-Echo-Verfahren gearbeitet wird. Ein Rechner 28 berechnet in der beschriebenen Weise die Korngrößenverteilung und die Feststoffkonzentration.

Es werden eine Mehrzahl von m Frequenzen $f_j$; $1 \leq j \leq m$ eingekoppelt derart, daß die Wellenlänge der Ultraschallwellen mit der größten Frequenz $f_m$ etwa dem Durchmesser $x_{min}$ der kleinsten zu messenden Teilchen entspricht oder kleiner als dieser ist und daß die Wellenlänge der Ultraschallwellen mit der kleinsten Frequenz $f_j$ etwa dem Durchmesser $x_{max}$ der größten zu messenden Teilchen entspricht oder großer als dieser ist.

Die gemessene Absorption $A_j$ der Suspension für Ultraschallwellen einer bestimmten Frequenz $f_j$ wird als Summe

$$A_j = \sum_{i=1}^{n} a_{ij} c_i$$

dargestellt, wobei $a_{ij}$ der Absorptionskoeffizient bei einer bestimmten Frequenz $f_j$ derjenigen Feststoffteilchen ist, deren Größe im Teilchen-Größenintervall $\triangle x_i$ liegt und $c_i$ die Konzentration der Teilchen dieses Größenintervalls $\triangle x_i$ in der Suspension ist. Das derart gebildete lineare Gleichungssystem wird in bekannter Weise nach den unbekannten $c_i$ als Funktion der Teilchen-Größenintervalle aufgelöst, was unmittelbar die Korngrößenverteilung ergibt.

**Patentansprüche**

1. Verfahren zum gleichzeitigen Messen der Feststoffkonzentration und der Korngrößenverteilung in einer Suspension, bei dem Ultraschallwellen mit mehr als einer Frequenz in die Suspension eingekoppelt und ihre Absorption durch die Feststoffteilchen gemessen und ausgewertet wird,
dadurch gekennzeichnet,

a) daß eine Mehrzahl von m Frequenzen $f_j$, mit $1 \leq j \leq m$, derart gewählt werden, daß die Wellenlängen der Ultraschallwellen mit der größten Frequenz $f_m$ etwa dem Durchmesser $x_{min}$ der kleinsten zu messenden Teilchen entspricht oder kleiner als dieser ist und daß die Wellenlängen der Ultraschallwellen mit der kleinsten Frequenz $f_1$ etwa dem Durchmesser $x_{max}$ der größten zu messenden Teilchen entspricht oder größer als dieser ist,

b) daß die gemessene Absorption $A_j$ der Suspension für Ultraschallwellen einer bestimmten Frequenz $f_j$ als Summe

$$A_j = \sum_{i=1}^{n} a_{ij} c_i \tag{I}$$

dargestellt wird, wobei $a_{ij}$ der Absorptionskoeffizient bei einer bestimmten Frequenz $f_j$ derjenigen Feststoffteilchen ist, deren Größe im Teilchen-Größenintervall $\triangle x_i$ liegt, $c_i$ die Konzentration der Teilchen dieses Größenintervalls $\triangle x_i$ in der Suspension und n die Anzahl der Teilchen-Größen-Intervalle ist, und

c) daß das derart gebildete lineare Gleichungssystem I in bekannter Weise nach den Unbekannten $c_i$ als Funktion der Teilchen-Größenintervalle aufgelöst wird.

2. Verfahren nach Anspruch 1,
dadurch gekennzeichnet,
daß die Anzahl der Frequenzen gleich der Anzahl der Teilchen-Größeninterwalle ist.

3. Verfahren nach einem der Ansprüche 1 oder 2,
dadurch gekennzeichnet,
daß die Anzahl der Teilchen-Größenintervalle größer oder gleich 5 gewählt ist.

4. Verfahren nach einem der vorhergehenden Ansprüche,
dadurch gekennzeichnet,
daß die Teilchen-Größenintervalle äquidistant zwischen den Logarithmen der Durchmesser der kleinsten und der größten zu erwartenden Teilchen gebildet werden.

5. Verfahren nach einem der vorhergehenden Ansprüche,
dadurch gekennzeichnet,
daß ein breitbandig durchregelbares Ultraschallwellenband eingekoppelt wird.

6. Verfahren nach einem der Ansprüche 1 - 4,
dadurch gekennzeichnet,
daß mehrere Ultraschallwellen verschiedener Frequenz mittels eines einzigen Schwingers durch Ausnutzung von Oberwellen erzeugt werden.

7. Verfahren nach einem der vorhergehenden Ansprüche,
dadurch gekennzeichnet,
daß die Absorption im Impuls-Echo-Betrieb gemessen wird.

8. Verfahren nach einem der vorhergehenden Ansprüche,
dadurch gekennzeichnet,
daß die Grund- und Oberwellen eines oder mehrerer Ultraschallwellen-Sender in die Suspension eingekoppelt werden.

9. Verfahren nach Anspruch 8,
dadurch gekennzeichnet,
daß in kurz aufeinanderfolgenden Zeitintervallen jeweils eine der Grund- und Oberschwingungen eines oder mehrerer Sender (12) in die Suspension eingekoppelt wird.

10. Verfahren nach Anspruch 8,
dadurch gekennzeichnet,
daß die Absorption mehrerer Frequenzen simultan gemessen wird, wobei ein oder mehrere Sender (12) jeweils gleichzeitig in der Grundschwingung und einer oder mehreren Oberschwingungen angeregt werden.

11. Verfahren nach einem der Ansprüche 8 - 10,
dadurch gekennzeichnet,
daß die Ultraschallwellen-Sender (12) im Impuls-Echo-Betrieb auch als Empfänger eingesetzt sind, wobei zumindest ein Schall-Reflektor den Ultraschall-Sendern (12) gegenüberliegend an der Meßstrecke angeordnet ist.

12. Verfahren nach einem der Ansprüche 8 - 10,
dadurch gekennzeichnet,
daß die Ultraschallwellen-Sender (12) kontinuierlich angeregt werden und daß die Absorptionsstrecke die die Suspension einschließende Wandung unter einem Winkel durchsetzt, der verschieden von 90° ist.

## Claims

1. A method of simultaneously measuring the concentration of solids and the particle size distribution in a suspension, wherein ultrasonic waves of more than one frequency are coupled into the suspension and the absorption thereof by the solid particles is measured and evaluated, characterized

a) in that a plurality of frequencies $f_j$, with $1 \leq j \leq m$, are so selected that the wavelengths of the ultrasonic waves of the highest frequency $f_m$ approximately corresponds to or is smaller than the diameter $x_{min}$ of the smallest particles to be measured, and that the wavelengths of the ultrasonic waves of the smallest frequency $f_1$ approximately corresponds to or is greater than the diameter $x_{max}$ of the largest particles to be measured,

b) in that the absorption $A_j$ measured of the suspension regarding ultrasonic waves of a certain frequency $f_j$ is represented as the sum

$$A_j = \sum_{i=1}^{n} a_{ij} c_i \qquad (I)$$

wherein $a_{ij}$ is the coefficient of absorption at a certain frequency $f_j$ of those solid particles whose dimension lies in the particle size interval $\triangle x_i$, $c_i$ is the concentration of the particles of this dimensional interval $\triangle x_i$ in the suspension, and n is the number of the particle size intervals, and

c) in that the linear equation system I thus formed is solved in per se known manner with respect to the unknown quantities $c_i$ as a function of the particle size intervals.

2. The method as claimed in claim 1, characterized in that the number of frequencies equals the number of particle size intervals.

3. The method as claimed in one of claims 1 or 2, characterized in that the number of particle size intervals is selected to be greater than or equal to 5.

4. The method as claimed in one of the preceding claims, characterized in that the particle size intervals are formed equidistantly between the logarithms of the diameters of the smallest and largest particles to be expected.

5. The method as claimed in one of the preceding claims, characterized in that an ultrasonic wave band fit for broadband control is coupled in.

6. The method as claimed in one of claims 1 to 4, characterized in that a plurality of ultrasonic waves of different frequencies are generated by a single oscillator, utilizing harmonics.

7. The method as claimed in one of the preceding claims, characterized in that the absorption is measured in pulse-echo operation.

8. The method as claimed in one of the preceding claims, characterized in that the fundamentals and harmonics of one or more ultrasonic wave transmitters are coupled into the suspension.

9. The method as claimed in claim 8, characterized in that one each of the fundamentals and harmonics of one or more transmitters (12) are coupled into the suspension at time intervals in quick succession.

10. The method as claimed in claim 8, characterized in that the absorption of a plurality of frequencies is measured simultaneously, one or more transmitters (12) each being excited simultaneously at the fundamental and one or more of the harmonics.

11. The method as claimed in one of claims 8 to 10, characterized in that in the pulse-echo operation the ultrasonic wave transmitters (12) are used also as receivers, at least one sound reflector being arranged opposite the ultrasonic transmitters (12) at the measuring section.

12. The method as claimed in one of claims 8 to 10, characterized in that the ultrasonic transmitters (12) are excited simultaneously, and that the absorption section passes at an angle other than 90° through the walls enclosing the suspension.

## Revendications

1. Procédé pour mesurer simultanément la concentration en solides et la répartition granulométrique dans une suspension, selon lequel des ondes ultrasoniques ayant plus d'une fréquence sont appliquées à la suspension et leur absorption par les particules solides est mesurée et évaluée, caractérisé en ce que:

a) on choisit un nombre m de fréquences $f_j$, avec $1 \leqslant j \leqslant m$, de telle sorte que la longueur d'onde des ondes ultrasoniques de fréquence maximale $f_m$ corresponde à peu près au diamètre $x_{min}$ des plus petites particules à mesurer ou soit inférieure à celui-ci et que la longueur d'onde des ondes ultrasoniques de fréquence minimale $f_1$ corresponde à peu près au diamètre $x_{max}$ des plus grosses particules à mesurer ou soit supérieure à celui-ci,

b) l'absorption mesurée de la suspension pour des ondes ultrasoniques d'une fréquence déterminée $f_j$ est représentée par la somme:

$$\stackrel{\backprime}{A}_j = \sum_{i=1}^{n} a_{ij} c_i \qquad (I)$$

où $a_{ij}$ désigne le coefficient d'absorption pour une fréquence déterminée $f_j$ des particules solides dont la grosseur rentre dans l'intervalle de grosseurs de particules $\Delta x/i$, $c_i$ désigne la concentration des particules de cet intervalle de grosseurs $\Delta x_i$ dans la suspension et n désigne le nombre des intervalles de grosseurs de particules, et

c) le système d'équations linéaires I ainsi formé est résolu d'une manière connue pour l'inconnue $c_i$ comme une fonction des intervalles de grosseurs de particules.

2. Procédé selon la revendication 1, caractérisé en ce que le nombre des fréquences est égal au nombre des intervalles de grosseurs de particules.

3. Procédé selon une des revendications 1 ou 2, caractérisé en ce que le nombre des intervalles de grosseurs de particules est supérieur ou égal à cinq.

4. Procédé selon une des revendications précédentes, caractérisé en ce que les intervalles de grosseurs de particules sont formés de façon équidistante entre les logarithmes des diamètres des particules les plus petites et les plus grosses auxquelles on peut s'attendre.

5. Procédé selon une des revendications précédentes, caractérisé en ce qu'on applique une bande d'ondes ultrasoniques réglable en continu et en largeur.

6. Procédé selon une des revendications 1 à 4, caractérisé en ce que plusieurs ondes ultrasoniques de fréquences différentes sont produites à l'aide d'un seul oscillateur par utilisation d'harmoniques.

7. Procédé selon une des revendications précédentes, caractérisé en ce que l'absorption est mesurée par un processus d'écho d'impulsions.

8. Procédé selon une des revendications précédentes, caractérisé en ce que l'onde fondamentale et les ondes harmoniques d'un ou plusieurs émetteurs d'ondes ultrasoniques sont appliquées à la suspesion.

9. Procédé selon la revendication 8, caractérisé en ce que respectivement une des ondes fondamentales et harmoniques d'un ou plusieurs émetteurs (12) sont appliquées à la suspension dans des périodes de temps se succédant à courts intervalles.

10. Procédé selon la revendication 8, caractérisé en ce que l'absorption de plusieurs fréquences est mesurée simultanément, auquel cas un ou plusieurs émetteurs (12) sent respectivement excités simultanément dans le mode à onde fondamentale et dans un ou plusieurs modes à harmoniques.

11. Procédé selon une des revendications 3 à 10, caractérisé en ce que les émetteurs d'ondes ultrasoniques (12) sont utilisés, dans le mode avec échos d'impulsions, également comme des récepteurs, auquel cas au moins un réflecteur d'échos est disposé à l'opposé des émetteurs ultrasoniques (12) dans le trajet de mesure.

12. Procédé selon une des revendications 8 à 10, caractérisé en ce que les émetteurs d'ondes ultrasoniques (12) sont excités de façon continue et en ce que le trajet d'absorption coupe la paroi délimitant la suspension selon un certain angle, qui est différent de 90°.

FIG.1

FIG. 2

3